# EUROPÄISCHE PATENTSCHRIFT

(11) **EP 1 721 373 B1**
(45) Veröffentlichungstag und Bekanntmachung des Hinweises auf die Patenterteilung: **02.12.2009**
(21) Anmeldenummer: 05715060.9
(22) Anmeldetag: 02.03.2005
(51) Int. Cl.: H02H 1/04

(54) **DREI- ODER VIERPOLIGER NIEDERSPANNUNGS-LEISTUNGSSCHALTER MIT ALS STROMSENSOREN DIENENDEN ROGOWSKISPULEN**
THREE OR FOUR POLE LOW-VOLTAGE POWER SWITCH PROVIDED WITH ROGOWSKI COILS OPERATING AS CURRENT SENSORS
DISJONCTEUR BASSE TENSION A TROIS OU QUATRE POLES POURVU DE BOBINES ROGOWSKI SERVANT DE CAPTEURS DE COURANT

(30) Priorität: 04.03.2004 DE 102004011023
(43) Veröffentlichungstag der Anmeldung: 15.11.2006
(73) Patentinhaber: SIEMENS AKTIENGESELLSCHAFT, 80333 München (DE)
(72) Erfinder: DRIEHORN, Thomas, 12249 Berlin (DE); KRAUSS, Andreas, 10825 Berlin (DE); PANCKE, Andreas, 13507 Berlin (DE); REDMANN, Ilka, 14612 Falkensee (DE); RÖHL, Wolfgang, 13503 Berlin (DE)
(86) Internationale Anmeldenummer: PCT/DE2005/000383
(87) Internationale Veröffentlichungsnummer: WO 2005/086308

(56) Entgegenhaltungen:
- EP-A- 0 939 472
- DE-A1- 10 054 496

## Beschreibung

Die Erfindung betrifft einen drei- oder vierpoligen Niederspannungs-Leistungsschalter mit als Stromsensoren dienenden Rogowskispulen, einem elektronischen Überstromauslöser und einer Einrichtung zur Erdschlusserfassung, wobei die Ausgänge der Rogowskispulen über jeweils einen RC-Tiefpass auf einen Messverstärker des Überstromauslösers geführt sind.

Drei- oder vierpolige Niederspannungs-Leistungsschalter werden teilweise mit einer Einrichtung zur Erdschlusserfassung ausgerüstet. Hierzu muss die vektorielle Summe der Ströme in den drei beziehungsweise vier Leitern des überwachten Netzes gebildet werden. Auch der Anschluss eines externen Summenstromwandlers, der die Stromsumme der Primärströme direkt abbildet, ist möglich. Ein erfasster Erdschluss wird je nach den Erfordernissen der Schaltanlage, in die der Leistungsschalter eingesetzt ist, entweder nur gemeldet oder bewirkt nach einer voreingestellten Verzögerungszeit das Auslösen des Schalters.

Arbeitet der Leistungsschalter mit Rogowskispulen als Stromsensoren, wie es beispielsweise aus der DE 100 54 496 A1 bekannt ist, so sind die Ströme in den Rogowskispulen viel zu klein für eine Summenauswertung nach der eingangs beschriebenen Art der Erfassung in der Sternpunktleitung. Um trotzdem die Erdschlusserfassung zu ermöglichen, wurde die Stromsumme bisher aus den einzelnen Stromsignalen nach deren Analog-Digital-Wandlung im Mikroprozessor des Überstromauslösers durch Berechnung erzeugt und als Digitalwert bereitgestellt.

Durch die Abtastung im Prozessor kommt es zu Fehlern, da der Prozessor die einzelnen Analog-Digital-Wandlerwerte von Phase zu Phase mit einem Zeitversatz erfasst. Das bedeutet, dass das Signal von Phase L1 zu Phase N mit einer Zeitdifferenz von 90 µs gemessen wird. Die Stromsumme lässt sich zwar durch Interpolation und Rückrechnen auf den jeweils ersten von drei beziehungsweise vier Abtastwerten berechnen, insbesondere bei dynamischen Stromänderungen im Netz verbleibt jedoch ein erheblicher systematischer Fehler.

Der Erfindung liegt die Aufgabe zugrunde, die Erdschlusserfassung für einen Niederspannungs-Leistungsschalter der eingangs genannten Art mit Rogowskispulen als Stromsensoren auf einfachere Art zu ermöglichen.

Erfindungsgemäß wird die Aufgabe gelöst durch die Merkmale des Anspruchs 1.

Danach werden die Ausgangssignale aller Rogowskispulen über Widerstände gemeinsam auf einen Integrationskondensator geführt, dessen Spannung das Eingangssignal eines zusätzlichen, die Stromsumme im überwachten Netz abbildenden Messverstärkers bildet. Das Ausgangssignal dieses Messverstärkers wird dann in bekannter Weise im Mikroprozessor des Überstromauslösers weiterverarbeitet.

Die Erfindung soll nachstehend anhand eines Ausführungsbeispiels noch näher erläutert werden. Die zugehörige Zeichnung zeigt in einem Prinzipschaltbild die Stromerfassung für einen elektronischen Überstromauslöser eines Niederspannungs-Leistungsschalters.

Als Sensoren zur Erfassung der Netzströme sind Rogowskispulen 1 eingesetzt. Die Ausgänge der Rogowskispulen 1 sind über eine symmetrische Tiefpass-RC-Beschaltung 2 an die Eingänge von Messverstärkern 3 geführt. An deren Ausgängen stehen die den Netzströmen proportionalen Signale IL1, IL2, IL3, ILN für die drei Phasenleiter und den Neutralleiter des Netzes an, die dann über hier nicht gezeigte AD-Wandler an einen Mikroprozessor geführt werden, der die Signale IL1, IL2, IL3, ILN auf unzulässig hohe Werte hin überwacht und gegebenenfalls eine unverzögerte oder verzögerte Auslösung des Leistungsschalters bewirkt.

Zusätzlich zur Erfassung der einzelnen Ströme ist nunmehr noch eine Summenbildung auf der Analogseite des Überstromauslösers vorgesehen. Hierzu sind die Ausgangssignale der Rogowskispulen 1 über jeweils einen symmetrischen Tiefpass, bestehend aus den Widerständen 4 und 5 und einem gemeinsamen Integrationskondensator 6, auf einen weiteren Messverstärker 7 geführt, an dessen Ausgang ein Signal ISumme ansteht, das die Summe aller Ströme im überwachten Netz repräsentiert. Ist die Stromsumme (abzüglich eines voreingestellten Toleranzwertes) ungleich Null, so liegt ein Erdschluss in dem Bereich vor, der dem Leistungsschalter nachgeordnet ist. Der Erdschluss wird durch eine optische Anzeige gemeldet und führt gegebenenfalls nach einer voreingestellten Verzögerungszeit auch zum Auslösen des Überstromauslösers und somit zu einem Abschalten der angeschlossenen Verbraucher.

Mit der Anordnung ist es möglich, den Messbereich der Summenstrombildung in der Verstärkung so zu wählen, dass die maximale Aussteuerung des Analog-Digital-Wandlers ausgenutzt werden kann. Der vorher aufgetretene Abtastfehler ist nicht mehr vorhanden.

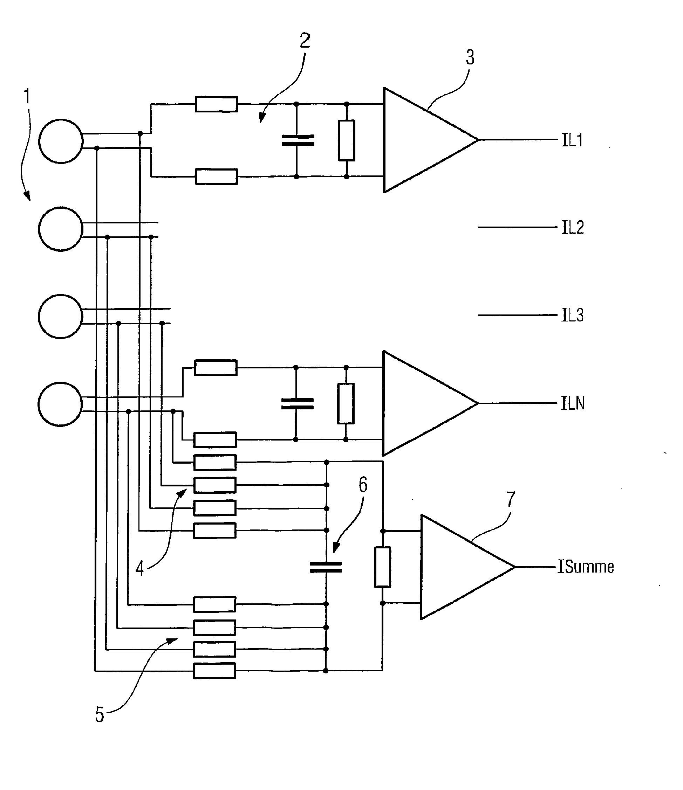

## Patentansprüche

1. Drei- oder vierpoliger Niederspannungs-Leistungsschalter mit als Stromsensoren dienenden Rogowskispulen (1), einem elektronischen Überstromauslöser und einher Einrichtung zur Erdschlusserfassung, wobei die Ausgänge der Rogowskispulen (1) über jeweils einen RC-Tiefpass (2) auf einen Messverstärker (3) des Überstromauslösers geführt sind,
**dadurch gekennzeichnet,**
**dass** die Ausgangssignale aller Rogowskispulen (1) außerdem über Widerstände (4, 5) gemeinsam auf einen Integrationskondensator (6) geführt sind, dessen Spannung das Eingangssignal eines weiteren, die Stromsumme im überwachten Netz abbildenden Messverstärkers (7) bildet.

## Claims

1. Three-pole or four-pole low-voltage power switch using Rogowski coils (1) as current sensors, an electronic overcurrent release and a device for ground-fault detection, the outputs of the Rogowski coils (1) each being taken via an RC low-pass filter (2) to an instrumentation amplifier (3) of the overcurrent release,
**characterized in that**
the output signals of all the Rogowski coils (1) are taken via resistors (4, 5) in common to an integration capacitor (6), whose voltage forms the input signal of an additional instrumentation amplifier (7) indicating the summation current in the monitored power network

## Revendications

1. Disjoncteur de base tension à trois pôles ou à quatre pôles, ayant des bobines ( 1 ) de Rogowski servant de capteurs de courant, un déclencheur électronique dans le cas de surintensités et un dispositif de détection de perte à la terre, les sorties des bobines ( 1 ) de Rogowski allant par respectivement un passe-bas RC ( 2 ) à un amplificateur ( 3 ) de mesure du déclencheur dans le cas de surintensités,
**caractérisé en ce que** les signaux de sortie de toutes les bobines ( 1 ) de Rogowski sont envoyées, en outre, par des résistances ( 4, 5 ) conjointement à un condensateur ( 6 ) d'intégration dont la tension forme le signal d'entrée d'un autre amplificateur ( 7 ) de mesure reproduisant la somme des courants dans le réseau contrôlé.
